# EUROPÄISCHE PATENTSCHRIFT

(11) **EP 1 099 743 B1**
(45) Veröffentlichungstag und Bekanntmachung des Hinweises auf die Patenterteilung: **10.11.2004**
(21) Anmeldenummer: 00124278.3
(22) Anmeldetag: 13.11.2000
(51) Int. Cl.: C09K 9/02

(54) **Photochromer Kunststoffgegenstand**
Photochromic plastic article
Article en plastique photochromique

(30) Priorität: 12.11.1999 DE 19954525
(43) Veröffentlichungstag der Anmeldung: 16.05.2001
(73) Patentinhaber: Rodenstock GmbH, 80469 München (DE)
(72) Erfinder: Mann, Claudia, Dr., 80634 München (DE); Melzig, Manfred, Dr., 82234 Wessling (DE); Weigang, Udo, Dr., 88638 München (DE)
(74) Vertreter: Müller-Boré & Partner Patentanwälte

(56) Entgegenhaltungen:
- FR-A- 2 677 366
- PATENT ABSTRACTS OF JAPAN vol. 010, no. 380 (P-528), 19. Dezember 1986 (1986-12-19) & JP 61 169838 A (AGENCY OF IND SCIENCE & TECHNOL), 31. Juli 1986 (1986-07-31)
- PATENT ABSTRACTS OF JAPAN vol. 010, no. 250 (P-491), 28. August 1986 (1986-08-28) & JP 61 077846 A (NIPPON SHEET GLASS CO LTD), 21. April 1986 (1986-04-21)
- DATABASE WPI Section Ch, Week 198850 Derwent Publications Ltd., London, GB; Class A89, AN 1988-357727 XP002160266 & JP 63 268786 A (FUJI PHOTO FILM CO LTD), 7. November 1988 (1988-11-07)
- PATENT ABSTRACTS OF JAPAN vol. 013, no. 015 (C-559), 13. Januar 1989 (1989-01-13) & JP 63 223084 A (AGENCY OF IND SCIENCE & TECHNOL), 16. September 1988 (1988-09-16)
- PATENT ABSTRACTS OF JAPAN vol. 1999, no. 08, 30. Juni 1999 (1999-06-30) & JP 11 071368 A (IRIE MASAHIRO), 16. März 1999 (1999-03-16)

## Beschreibung

Die vorliegende Erfindung betrifft einen photochromen Kunststoffgegenstand gemäß Anspruch 1 der ein transparentes Kunststoffmaterial und darin eingebracht mindestens einen photochromen Farbstoff umfasst, wobei mindestens das photochrome Reaktionszentrum des photochromen Farbstoffs von einer Schutzhülle auf Basis einer supramolekularen Struktur umgeben ist.

Es sind verschiedene Farbstoffklassen bekannt, die bei Bestrahlung mit Licht bestimmter Wellenlängen, insbesondere Sonnenstrahlen, reversibel ihre Farbe wechseln. Dies rührt daher, daß diese Farbstoffmoleküle durch Energiezufuhr in Form von Licht in einen angeregten farbigen Zustand übergehen, den sie bei Unterbrechung der Energiezufuhr wieder verlassen, wodurch sie in ihren farblosen oder zumindest kaum gefärbten Normalzustand zurückkehren. Zu diesen photochromen Farbstoffen gehören beispielsweise die Naphthopyrane, die im Stand der Technik mit verschiedenen Substituenten bereits beschrieben wurden.

Pyrane, speziell Naphthopyrane und von diesen abgeleitete größere Ringsysteme, sind die derzeit am meisten bearbeitete Klasse photochromer Verbindungen. Obwohl bereits 1966 erstmals zum Patent angemeldet (US-A-3,567,605), konnten erst in den späten 90er Jahren Verbindungen entwickelt werden, die für den Einsatz in Brillengläsern geeignet erschienen.

Für die Herstellung von photochromen Gegenständen aus Kunststoffen, speziell Brillengläsern, sind mehrere Verfahren bekannt und industriell im Einsatz: nämlich die Massefärbung, d.h. die Zugabe der photochromen Farbstoffe in die Gießharzmischung vor der Polymerisation, die Oberflächenfärbung, bei der in mindestens eine Oberfläche des zumindest teilweise ausgehärteten, den Kunststoffgegenstand aufbauenden Kunststoffmaterials ("Matrix") die photochromen Farbstoffe mittels thermischer Diffusion eingebracht werden, wobei üblicherweise ein Zwischenträger, der die photochromen Moleküle vor der Diffusion aufnimmt und der anschließend wieder entfernt wird, verwendet wird, und die Beschichtung, bei der eine photochrome Schicht in einer Dicke von etwa 10 - 50 µm auf den ausgehärteten Kunststoffgegenstand aufgebracht wird.

In allen Fällen werden die photochromen Eigenschaften der verwendeten Farbstoffe durch die sie umgebende Matrix stark beeinflußt. Dies betrifft in geringerem Maße die Farbe, jedoch stärker die Lebensdauer, d.h. die Verwendungszeit des entsprechenden photochromen Kunststoffgegenstands im Gebrauch, und insbesondere die kinetischen Eigenschaften, d.h. die Eindunkelungs- und Aufhellgeschwindigkeit, die Eindunkelungstiefe und deren Abhängigkeit von der Temperatur. Im allgemeinen verwenden die Hersteller von Kunststoffgläsern eine Vielfalt unterschiedlicher Kunststoffmaterialien in ihrem Programm, um einerseits den Erfordernissen hinsichtlich besonderer Materialeigenschaften nachzukommen, wie z.B. die Verwendung von Polycarbonat, wenn Materialeigenschaften wie die Unzerbrechlichkeit im Vordergrund stehen, und andererseits Materialien mit unterschiedlichen Brechungsindices anzubieten. Derzeit sind für Kunststoffbrillengläser Materialien mit den Indices 1,50, 1,52, 1,54, 1,55, 1,56, 1,60, 1,66, 1,67, 1,71 und 1,74 im Handel erhältlich.

Um eine möglichst breite Auswahl anbieten und damit den Markt möglichst umfassend abdecken zu können, ist es für die Hersteller von Brillengläsem geboten, in jedem Index unterschiedliche Farben und Leistungsstärken, d.h. beispielsweise eher auf "indoor"-Verwendung oder eher auf Sonnenschutz ausgerichtet, anzubieten. Es ist jedoch unerwünscht, wenn derartige photochrome Kunststoffgegenstände vom Brechungsindex des jeweiligen Kunststoffmaterials abhängige Eigenschaften aufweisen. Dies ist aus den vorgenannten Gründen derzeit nur zu vermeiden, wenn für jedes Material eine sehr zeit- und kostenaufwendige Anpassung der jeweiligen photochromen Farbstoffe an das zu verwendende Kunststoffmaterial erfolgt. Photochrome Farbstoffe, die vom sie umgebenden Kunststoffmaterial praktisch unabhängige Eigenschaften zeigen, sind jedoch derzeit nicht verfügbar.

Somit liegt der vorliegenden Erfindung die Aufgabe zugrunde, einen photochromen Kunststoffgegenstand bereitzustellen, wobei die Eigenschaften des darin eingebrachten photochromen Farbstoffs sowohl im angeregten als auch im nicht angeregten Zustand vom dem, den jeweiligen Farbstoff umgebenden Kunststoffmaterial praktisch unabhängig sein sollen. Insbesondere sollen die Eigenschaften des photochromen Farbstoffs im wesentlichen nicht vom dem Brechungsindex des entsprechend verwendeten Kunststoffmaterials abhängen.

Diese Aufgabe wird durch die in den Ansprüchen gekennzeichneten Gegenstände gelöst.

Insbesondere wird ein photochromer Kunststoffgegenstand bereitgestellt, umfassend ein transparentes Kunststoffmaterial und darin eingebracht mindestens einen photochromen Farbstoff (Gastverbindung), wobei mindestens das photochrome Reaktionszentrum des photochromen Farbstoffs von einer Schutzhülle (Wirtverbindung) auf Basis einer supramolekularen Struktur umgeben ist. Das photochrome Reaktionszentrum des photochromen Farbstoffs ist der für die Photochromie maßgebliche bzw. der die Photochromie hervorrufende Molekülteil des Farbstoffmoleküls. Vorzugsweise wird das gesamte Farbstoffmolekül von der Schutzhülle bzw. dem Schutzmolekül (Wirtverbindung) umgeben bzw. geschützt, d.h. das Farbstoffmolekül ist in einer molekularen Tasche bzw. Röhre auf Basis einer supramolekularen Struktur angeordnet bzw. in einer Art Käfigstruktur molekular eingeschlossen.

Gemäß der vorliegenden Erfindung wird mindestens das photochrome Reaktionszentrum des in den Kunststoffgegenstand eingebrachten photochromen Farbstoffs durch die erfindungsgemäß eingesetzte Schutzhülle auf Basis einer supramolekularen Struktur räumlich derart geschützt, daß der jeweilige photochrome Farbstoff, wenn in verschiedene Kunststoffmatrizen eingebracht, im wesentlichen keine Abhängigkeit der photochromen Eigenschaften von dem jeweils verwendeten Kunststoffmaterial zeigt. Aufgrund der erfindungsgemäßen Aufnahme der photochromen Farbstoffe in die supramolekulare Struktur unter Bildung eines sogenannten Wirt/Gast-Komplexes, worin der photochrome Farbstoff als Gastverbindung und die Schutzhülle als Wirtverbindung fungieren, werden die für die Anwendung in photochromen Kunststoffgegenständen maßgeblichen Eigenschaften wie das Absorptionsverhalten, die Eindunkelungs- und Aufhellgeschwindigkeit, die Eindunkelungstiefe und deren Temperaturabhängigkeit und die Lebensdauer, sowohl im angeregten als auch im nicht-angeregten Zustand von dem sie umgebenden Kunststoffmaterial im wesentlich nicht oder nur kaum beeinflußt. Indem der photochrome Farbstoff in dem erfindungsgemäßen Kunststoffgegenstand von einer Schutzhülle umgeben ist, wird dem bei der Lichtanregung sich öffnenden und strukturell umbildenden Molekülteil, d.h. dem photochromen Reaktionszentrum des photochromen Farbstoffs, ein Raum zur Verfügung gestellt wird, in den im wesentlichen kein Kunststoffmaterial eindringen kann oder über die räumliche Nähe durch andere Wechselwirkungen (Van der Waals-Wechselwirkungen, Dipolkräfte, etc.) Einfluß nehmen kann.

Der in den erfindungsgemäßen Kunststoffgegenstand eingebrachte, mindestens eine photochrome Farbstoff kann mit der erfindungsgemäß eingesetzten Schutzhülle bzw. Wirtverbindung auf Basis einer supramolekularen Struktur beispielsweise über ionische Bindungen, kovalente Bindungen, Wasserstoffbrückenbindungen, elektrostatische Wechselwirkungen, Dispersionskräfte, Dipol-Dipol-Wechselwirkungen oder Charge-Transfer-Wechselwirkungen verknüpft sein, wobei im wesentlichen keine Wechselwirkungen des photochromen Reaktionszentrums mit der Wirtverbindung auftreten, d.h. die molekular-dynamischen Strukturänderungen des photochromen Farbstoffmoleküls werden durch die Verknüpfung an die Wirtverbindung im wesentlichen nicht beeinflußt. Das photochrome Molekül kann dabei an die Schutzhülle bzw. das Schutzmolekül beispielsweise in der Art einer Enzym-Substrat-Wechselwirkung gebunden sein. In einer Ausführungsform der vorliegenden Erfindung ist das photochrome Farbstoffmolekül als Gastverbindung über eine oder mehrere ionische Bindungen oder Wasserstoffbrückenbindungen mit der Wirtverbindung auf Basis einer supramolekularen Struktur verknüpft. In einer anderen Ausführungsform der vorliegenden Erfindung ist das photochrome Farbstoffmolekül als Gastverbindung über eine oder mehrere kovalente Bindungen mit der Wirtverbindung auf Basis einer supramolekularen Struktur verknüpft, d.h. das photochrome Farbstoffmolekül wird durch kovalente Bindung(en) an die Schutzhülle gebunden. Die Wirtverbindungen und die Gastverbindung bilden dabei ein Molekül.

In einer bevorzugten Ausführungsform der vorliegenden Erfindung werden als Schutzhülle bzw. Wirtverbindungen supramolekulare Strukturen aus der Gruppe der Cryptanden, Cyclodextrine, Calixarene, Cyclophane, Späranden und Kronenether verwendet. Als supramolekulare Struktur, die den photochromen Farbstoff in der Art einer Schutzhülle bzw. molekularen Tasche bzw. molekularen Röhre (Wirtverbindung) umgibt, können insbesondere Hohlraum-haltige makromono-, bi- oder polycyclische Wirtverbindungen eingesetzt werden. Vorzugsweise weisen derartige Wirtverbindungen Hohlräume im Bereich von 8 Å bis 50 Å, vorzugsweise 10 Å bis 30 Å auf. Als Wirtmoleküle können beispielsweise 30- bis 80-gliedrige carbobicyclische oder carbopolycyclische Großhohlräume verwendet werden, in denen beispielsweise Triarylalkan-Gerüste, wie z.B. Triphenylethan-Gerüste, als Abstandshalter zur Erzeugung des entsprechenden Hohlraums für den photochromen Farbstoff als zu schützende Gastverbindung verwendet werden. Ferner können beispielsweise Cryptophane, die durch Verbrückung zweier Cyclotriveratrylen-Einheiten (10,15-Dihydro-2,3,7,8,12,13-hexamethoxy-5H-tribenzo[a.d.g]-cyclononen) über zwei oder mehr, vorzugsweise drei, C₆-C₃₀-Alkanketten erhältlich sind, verwendet werden. Als Cyclodextrine können beispielsweise solche mit sieben oder mehr, vorzugsweise zwölf oder mehr Glucopyranose-Einheiten eingesetzt werden. Als Sphäranden können beispielsweise spärische Kohlenwasserstoffe wie beispielsweise C₆₀H₆₀ verwendet werden. Als Wirtverbindung in der Art einer molekularen Röhre können beispielsweise makrocyclische Polyamine eingesetzt werden, die befähigt sind, sich axial zu Säulen zu stapeln, wie z.B. [-NR(CH₂CH₂)-]ₙ, wobei n eine ganze Zahl im Bereich von 6 bis 20, vorzugsweise 6 bis 12, ist und der Rest R ein C₁-C₁₂-Alkylrest, ein Arylrest, wie z.B. ein Phenylrest, ein Aralkylrest wie z.B. ein Benzylrest, ein C₁-C₁₂-Alkoxyrest oder ein (C₁-C₁₂)-Alkylen-(C₁-C₁₂)alkoxyrest ist.

Unter Berücksichtigung der die Photochromie hervorrufenden Molekülstrukturänderungen wird die Hohlraumgröße der supramolekularen Struktur an den Raumbedarf des zu umschließenden bzw. zu schützenden Farbstoffmoleküls angepasst bzw. in Abhängigkeit von der Molekülgröße des Farbstoffmolekül gewählt. Die Wirtverbindungen können wasserlöslich oder in organischen Medien, wie z.B. Ether, THF, Aceton, etc., löslich sein.

Als transparentes Kunststoffmaterial, das insbesondere als Träger bzw. Matrix für den bzw. die einzusetzenden photochromen Farbstoff(e) dient, enthält der erfindungsgemäße Kunststoffgegenstand ein oder mehrere Kunststoffmaterialien. Die verwendbaren Kunststoffmaterialien können die im Stand der Technik üblicherweise, insbesondere für ophthalmische Zwecke verwendbaren Kunststoffe sein. Beispielsweise kann das Kunststoffmaterial aus Poly(C₁-C₁₂-alkyl)methacrylaten, Polyoxyalkylenmethacrylaten, Polyalkoxyphenolmethacrylaten, Celluloseacetat, Cellulosetriacetat, Celluloseacetatpropionat, Celluloseacetatbutyrat, Polyvinylacetat, Polyvinylalkohol, Polyvinylchlorid, Polyvinylidenchlorid, Polycarbonaten, Polyestern, Polyurethanen, Polyethylenterephthalat, Polystyrol, Poly-α-methylstyrol, Polyvinylbutyral, Copoly(styrol-methylmethacrylat), Copoly(styrolacrylnitril) und Polymeren aus Bestandteilen der Gruppe, bestehend aus Polyol(allylcarbonat)monomeren, polyfunktionalen Acrylat-, Methacrylat- oder Diethylenglykoldimethacrylatmonomeren, ethoxylierten Bisphenol-A-dimethacrylat-monomeren, Diisopropenylbenzolmonomeren, Ethylenglykolbismethacrylatmonomeren, Poly(ethylenglykol)bismethacrylatmonomeren, ethoxylierten Phenolmethacrylatmonomeren, alkoxylierten Polyalkoholacrylatmonomeren und Diallylidenpentaerythritmonomeren oder Gemischen davon, ausgewählt sein.

Insbesondere kann das Kunststoffmaterial ein festes, transparentes Homo- oder Copolymer sein, ausgewählt aus der Gruppe, bestehend aus Poly(methylmethacrylat), Poly(ethylenglykolbismethacrylat), poly(ethoxyliertem Bis-phenol-Adimethacrylat), thermoplastischem Polycarbonat, Polyvinylacetat, Polyvinylbutyral, Polyurethan oder ein Polymer, ausgewählt aus den Bestandteilen der Gruppe, bestehend aus Diethylenglykolbis(allylcarbonat)monomeren, Diethylenglykoldimethacrylatmonomeren, ethoxylierten Phenolmethacrylatmonomeren, ethoxylierten Diisopropenylbenzolmonomeren und ethoxylierten Trimethylolpropantriacrylatmonomeren.

Die für die vorliegende Erfindung verwendbaren photochromen Verbindungen unterliegen keiner spezifischen Beschränkung. Vorzugsweise können sie aus der Klasse der Benzopyrane und höherer, davon abgeleiteter annellierter Ringsysteme, wie insbesondere Naphthopyrane oder Fluorenopyrane, ausgewählt werden. So können beispielsweise in 2,2-Stellung aromatisch bzw. heteroaromatisch substituierte [2H]-Naphtho(1,2-b)-pyrane, aber auch in 3,3 -Stellung entsprechend substituierte [3H]-Naphtho(2,1-b)-pyrane, wie z.B. die in PCT-DE 98/02820 beschriebenen Naphthopyrane und die in PCT/EP 99105258 beschriebenen Indeno[2,1-f]naphtho[1,2-b]pyranderivate und/oder Spiro-9-fluoreno[1,2-b]pyranderivate verwendet werden. Beispielhaft können hier
3,13-Diphenyl-3-(4-diphenylaminophenyl)-13-hydroxy-6-methoxy-indeno[2,1-f]-naphtho[1,2-b]pyran,
13-(2,5-Dimethylphenyl)-3-(4-diphenylaminophenyl)-13-hydroxy-6-methoxy-3-phenyl-indeno[2,1-f]-naphtho[1,2-b]pyran,
13-(2,5-Dimethylphenyl)-3-(4-diphenylaminophenyl)-13-hydroxy-3-phenyl-indeno[2,1-f]-naphtho[1,2-b]pyran,
Spiro-9-fluoreno-13'-[3-(4-dimethylaminophenyl)-6-methoxy-3-phenyl-indeno[2,1-f]naphtho[1,2-b]pyran],
Spiro-9-fluoreno-13'-[3-(4-dimethylaminophenyl)-3-phenyl-indeno[2,1-f]naphtho[1,2-b]pyran],
Spiro-9-fluoreno-13'-[3-(4-diphenylaminophenyl)-6-methoxy-3-phenyl-indeno[2,1-f]naphtho[1,2-b]pyran],
Spiro-9-fluoreno-13'-[3-(4-diphenylaminophenyl)-3-phenyl-indeno[2,1-f]naphtho[1,2-b]pyran],
Spiro-9-fluoreno-13'-{3-[4-(N-morpholinyl)phenyl]-6-methoxy-3-phenyl-indeno[2,1-f]naphtho[1,2-b]pyran},
Spiro-9-fluoreno-13'-{3-[4-(N-morpholinyl)phenyl]-3-phenyl-indeno[2,1-f]naphtho[1,2-b]pyran},
Spiro-9-fluoreno-13'-{6-methoxy-3-phenyl-3-[4-(N-piperidinyl)phenyl]-indeno[2,1-f]naphtho[1,2-b]pyran} und
Spiro-9-fluoreno-13'-{3-phenyl-3-[4-(N-piperidinyl)phenyl]-indeno[2,1-f]naphtho[1,2-b]pyran} sowie beispielsweise
3-(4-Diphenylaminophenyl)-3-(2-fluorphenyl)-3H-naphtho[2,1-b]pyran,
3-(4-Dimethylaminophenyl)-3-(2-fluorphenyl)-3H-naphtho[2,1-b]pyran,
3-(2-Fluorphenyl)-3-[4-(N-morpholinyl)phenyl]-3H-naphtho[2,1-b]pyran,
3-(2-Fluorphenyl)-3-[4-(N-piperidinyl)phenyl]-3H-naphtho[2,1-b]pyran,
3-(4-Dimethylaminophenyl)-6-(N-morpholinyl)-3-phenyl-3H-naphtho[2,1-b]pyran,
6-(N-Morpholinyl)-3-[4-(N-morpholinyl)phenyl]-3-phenyl-3H-naphtho[2,1-b]pyran,
6-(N-Morpholinyl)-3-phenyl-3-[4-(N-piperidinyl)phenyl]-3H-naphtho[2,1-b]pyran,
6-(N-Morpholinyl)-3-phenyl-3-[4-(N-pyrrolidinyl)phenyl]-3H-naphtho[2,1-b]pyran,
3-Phenyl-3-(2-fluorphenyl)-3H-naphtho[2,1-b]pyran,
6-(N-Morpholinyl)-3,3-diphenyl-3H-naphtho[2,1-b]pyran
   und
6-(N-Morpholinyl)-3-(4-methoxyphenyl)-3-phenyl-3H-naphtho[2,1-b]pyran
angeführt werden. Jedoch können auch die in US 5,753,146 und EP-A-0 562 915 beschriebenen Pyrane, sowie photochrome Farbstoffe anderer Klassen, beispielsweise Oxazine, wie z.B. die in US 5,753,146 beschriebenen Oxazine, oder Fulgide verwendet werden.

Der erfindungsgemäße photochrome Kunststoffgegenstand kann mittels verschiedener Vorgehensweisen hergestellt werden. Prinzipiell können photochrome Kunststoffgläser auf drei unterschiedlichen Wegen hergestellt werden. Zum einen können die photochromen Farbstoffe homogen in der Masse des Kunststoffglases verteilt werden. Alternativ können sie (meist nur konvexseitig) in die Oberfläche des Kunststoffglases unter Anwendung von Wärme durch Diffusion eingebracht werden. Ferner können sie in einer Schicht auf dem Kunststoffglas aufgebracht werden. Wenn die Schutzhülle bzw. die Wirtverbindung und das Farbstoffmolekül nicht über kovalente Bindungen verknüpft sind, kann im Rahmen der vorliegenden Erfindung zunächst der aus der Schutzhülle und dem Farbstoffmolekül aufgebaute Wirt/Gast-Komplex unter Nutzung des molekularen Self-Assembling-Phänomens hergestellt werden, wobei der gebildete Komplex entweder isoliert oder in Lösung belassen werden kann. Der gebildete Komplex kann dann - wie das Gesamtmolekül im Fall der Anknüpfung der Gastverbindung an die Wirtverbindung durch eine oder mehrere kovalente Bindungen - nach einer der vorgenannten Vorgehensweisen bzw. Verfahren zur Herstellung des erfindungsgemäßen photochromen Kunststoffgegenstands in das entsprechend verwendete transparente Kunststoffmaterial eingebracht werden. Aufgrund der Größe des Gesamtmoleküls bzw. Wirt/Gast-Komplexes werden zur Herstellung des erfindungsgemäßen Kunststoffgegenstands die Massefärbung, d.h. die Färbung homogen in Masse, und die Färbung unter Verwendung einer Beschichtung bevorzugt durchgeführt.

Der erfindungsgemäße photochrome Kunststoffgegenstand kann ferner eine oder mehrere die Kratzfestigkeit verbessernde Hartschichten aufweisen. Darüberhinaus können auch, vorzugsweise auf der dem Licht abgewandten Seite des Kunststoffgegenstands, ein oder mehrere herkömmliche Entspiegelungsschichten vorgesehen sein.

## Patentansprüche

1. Photochromer Kunststoffgegenstand, umfassend ein transparentes Kunststoffmaterial und darin eingebracht mindestens einen photochromen Farbstoff aus der Klasse der Benzopyrane und höherer, davon abgeleiteter annellierter Ringsysteme, wobei mindestens das photochrome Reaktionszentrum des photochromen Farbstoffs von einer Schutzhülle auf Basis einer supramolekularen Struktur umgeben ist, wobei die supramolekulare Struktur aus der Gruppe der Cryptanden, Calixarene, Cyclophane, Sphäranden und Kronenether ausgewählt ist.

2. Photochromer Kunststoffgegenstand nach Anspruch 1, wobei der photochrome Farbstoff mit der Schutzhülle auf Basis einer supramolekularen Struktur über ionische Bindungen, kovalente Bindungen, Wasserstoffbrückenbindungen, elektrostatische Wechselwirkungen, Dispersionskräfte, Dipol-Dipol-Wechselwirkungen oder Charge-Transfer-Wechselwirkungen verknüpft ist.

3. Photochromer Kunststoffgegenstand nach Anspruch 1 oder 2, wobei als supramolekulare Struktur eine Hohlraum-haltige makromono-, bi- oder polycyclische Wirtverbindung verwendet wird.

4. Photochromer Kunststoffgegenstand nach Anspruch 3, wobei die Wirtverbindung einen Hohlraum im Bereich von 8 Å bis 50 Å aufweist.

## Claims

1. Photochromic plastic article composed of a transparent plastic material and at least one photochromic dye incorporated therein from the class of benzopyrans and higher fused rings derived therefrom, wherein at least the photochromic reaction centre of the photochromic dye is surrounded by a protective sheath based on a supramolecular structure, wherein the supramolecular structure is selected from the group of cryptands, calixarenes, cyclophanes, spherands and crown ether.

2. Photochromic plastic article according to Claim 1, wherein the photochromic dye with the protective sheath based on a supramolecular structure is bonded via ionic bonds, covalent bonds, hydrogen bridge bonds, electrostatic interactions, dispersion forces, dipolar interactions or charge-transfer interactions.

3. Photochromic plastic article according to Claim 1 or 2, wherein a macromono-, bi- or polycyclic host compound containing voids is used as the supramolecular structure.

4. Photochromic plastic article according to Claim 3, wherein the host compound has a void in the range of 8 Å to 50 Å.

## Revendications

1. Article plastique photochrome, comprenant un matériau plastique transparent et étant incorporé, au moins un colorant photochrome de la classe des benzopyrannes et des systèmes cycliques supérieurs, condensés, dérivés de ceux-ci, où au moins le centre de réaction photochrome du colorant photochrome est entouré d'une enveloppe protectrice à base d'une structure supramoléculaire, où la structure supramoléculaire est choisie parmi le groupe des cryptands, des calixarènes, des cyclophanes, des sphérands et des éthers couronne.

2. Article plastique photochrome selon la revendication 1, où le colorant photochrome est relié à l'enveloppe protectrice à base d'une structure supramoléculaire par des liaisons ioniques, des liaisons covalentes, des ponts hydrogène, des interactions électrostatiques, des forces de dispersion, des interactions dipole-dipole ou des interactions de transfert de charge.

3. Article plastique photochrome selon la revendication 1 ou 2, où on utilise comme structure supramoléculaire, un composé hôte macromono-, bi- ou polycyclique contenant un espace vide.

4. Article plastique photochrome selon la revendication 3, où le composé hôte présente un espace vide dans la gamme allant de 8 Å à 50 Å.
